# FASCICULE DE BREVET EUROPEEN

(11) **EP 3 248 257 B1**
(45) Date de publication et mention de la délivrance du brevet: **28.04.2021**
(21) Numéro de dépôt: 15822968.2
(22) Date de dépôt: 11.12.2015
(51) Int. Cl.: H02H 7/122, H02M 1/32, B60L 3/00, B60L 15/00

(54) **PROCÉDÉ DE COMMANDE D'UNE MACHINE ÉLECTRIQUE SYNCHRONE À AIMANTS PERMANENTS**
VORRICHTUNG ZUR STEUERUNG EINER ELEKTRISCHEN PERMANENTMAGNET-SYNCHRONMASCHINE
METHOD FOR CONTROLLING A PERMANENT MAGNET SYNCHRONOUS ELECTRIC MACHINE

(30) Priorité: 20.01.2015 FR 1550428
(43) Date de publication de la demande: 29.11.2017
(73) Titulaire: Renault S.A.S., 92100 Boulogne-Billancourt (FR)
(72) Inventeur: NEGRE, Edouard, 78180 Montigny le Bretonneux (FR); NGUYEN, Thanh, 78470 Saint Remy les Chevreuse (FR)
(86) Numéro de dépôt international: PCT/FR2015/053442
(87) Numéro de publication internationale: WO 2016/116671

(56) Documents cités:
- EP-A1- 2 234 262
- EP-A2- 2 299 587
- US-A1- 2003 117 753
- US-A1- 2009 251 831
- US-A1- 2012 068 645
- US-A1- 2013 043 816

## Description

L'invention a pour domaine technique la commande des machines électriques à aimants permanents et plus particulièrement la commande de telles machines lors d'incidents.

Dans le cadre du développement des véhicules électriques et hybrides, le couple fourni par un moteur électrique de type machine synchrone à aimants doit être contrôlé. Le couple d'une machine synchrone est directement lié aux courants circulant dans ses phases. Celui-ci est réalisé au moyen d'un onduleur à découpage avec régulation des courants de phase sinusoïdaux synchronisés par rapport à la position du rotor, suivant l'amplitude et le déphasage de consignes.

Lorsqu'un défaut fonctionnel est détecté, le système doit pouvoir activer un mode de contrôle sûr, dit « mode refuge » (« failsafe mode », en langue anglaise). Les défauts fonctionnels conduisant à l'activation du mode refuge peuvent être un sur-courant, une surtension, un défaut de mesure de position, un défaut d'intégrité logicielle, un défaut batterie...

Les propriétés de ce mode refuge sont l'extinction ou la réduction du couple de sortie de la machine et l'extinction très rapide de la puissance électrique

L'extinction ou réduction du couple de sortie de la machine (ou réduction à une valeur faible, à définir selon l'application) permettent de respecter les contraintes de sureté de fonctionnement sur les accélérations intempestives.

L'extinction très rapide de la puissance électrique permet d'éviter toute surtension du bus DC d'alimentation de l'onduleur en cas d'ouverture des relais de la batterie. Elle permet également d'éviter tout échange non contrôlé de puissance avec la batterie, au cas où les relais de la batterie seraient fermés, ou défaillants et bloqués fermés.

Le mode refuge « naturel » de l'onduleur, en cas de défaut, consiste à imposer la configuration « circuit ouvert », de manière à couper les courants de phase, ce qui consiste simplement à couper l'alimentation des commandes des interrupteurs pour les maintenir à l'état ouvert.

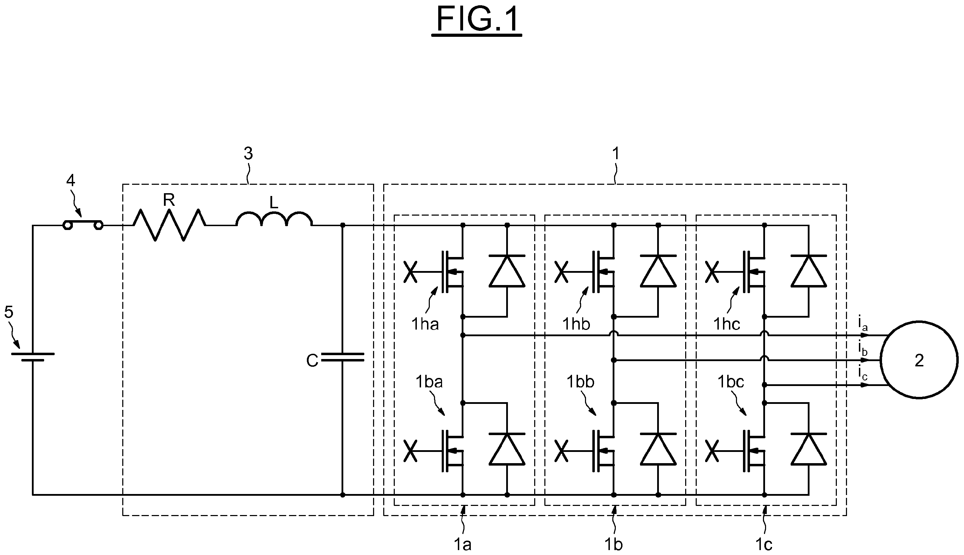

La figure 1 illustre ce mode « circuit ouvert », (« Open circuit » en langue anglaise) noté OC. On peut voir un onduleur 1 comprenant un ensemble d'interrupteurs référencés 1ha, 1hb, 1hc, 1ba, 1bb, et 1bc muni chacun d'une diode de roue libre connectée en parallèle. Les interrupteurs sont connectés en série par paires, l'interrupteur 1ha en série avec l'interrupteur 1ba au sein du bras la, l'interrupteur 1hb en série avec l'interrupteur 1bb au sein du bras 1b, l'interrupteur 1hc en série avec l'interrupteur 1bc au sein du bras 1c.

Les bras la, 1b et 1c sont connectés en parallèle entre eux et avec les entrées de l'onduleur.

Une première sortie de l'onduleur est connectée entre l'interrupteur 1ha et l'interrupteur 1ba, une autre entre l'interrupteur 1hb et l'interrupteur 1bb et une dernière entre l'interrupteur 1hc et l'interrupteur 1bc.

Les sorties de l'onduleur 1 sont connectées à une machine électrique triphasée référencée 2.

Les entrées de l'onduleur 1 sont connectées en parallèle d'une capacité C d'un circuit RLC résonant référencé 3. Dans ce circuit, la capacité C, une résistance R et une inductance L sont connectées en série. Le circuit RLC résonant est connecté en série à des relais de puissance 4 et à une batterie 5.

Ce mode refuge convient très bien pour les machines électriques à flux contrôlé, les machines à rotor bobiné ou machines asynchrones. En activant le mode « circuit ouvert », on démagnétise la machine et on annule le flux magnétique, ce qui rend la machine complètement passive et annule la puissance électrique.

La particularité des machines à aimant permanents est que, dès lors que le rotor acquiert de la vitesse, le flux à travers les bobinages du stator produit une tension entre les phases. Au-delà d'une certaine vitesse, dite « vitesse de base », cette tension dépasse la tension DC d'alimentation de l'onduleur. On rappelle que la tension DC ou tension de bus DC est mesurée aux bornes de la capacité C. Dans ce cas, si l'onduleur maintient ses interrupteurs ouverts, un courant s'établit naturellement dans les phases de la machines par les diodes de roue libre de l'onduleur. La machine produit alors une conversion d'énergie mécanique en énergie électrique émis sur le bus DC d'alimentation. Cette puissance électrique tend à égaliser la source de tension à la tension de force électromotrice. La conséquence est différente selon que la batterie est connectée ou non au bus DC d'alimentation.

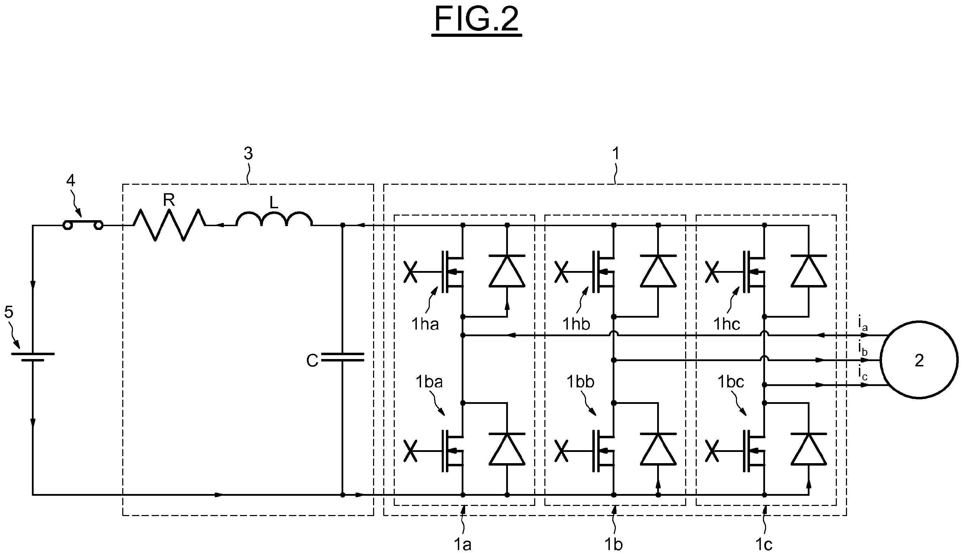

Si les relais de puissance 4 de la batterie sont fermés, il en résulte une puissance électrique non contrôlée ne dépendant que de la tension de la batterie et de la vitesse, ce qui peut conduire à un échauffement intempestif et incontrôlé de la batterie, ainsi qu'à un couple de freinage intempestif et incontrôlé au niveau de la machine. Les courants circulant dans un tel cas par les diodes de roue libre sont illustrés par la figure 2.

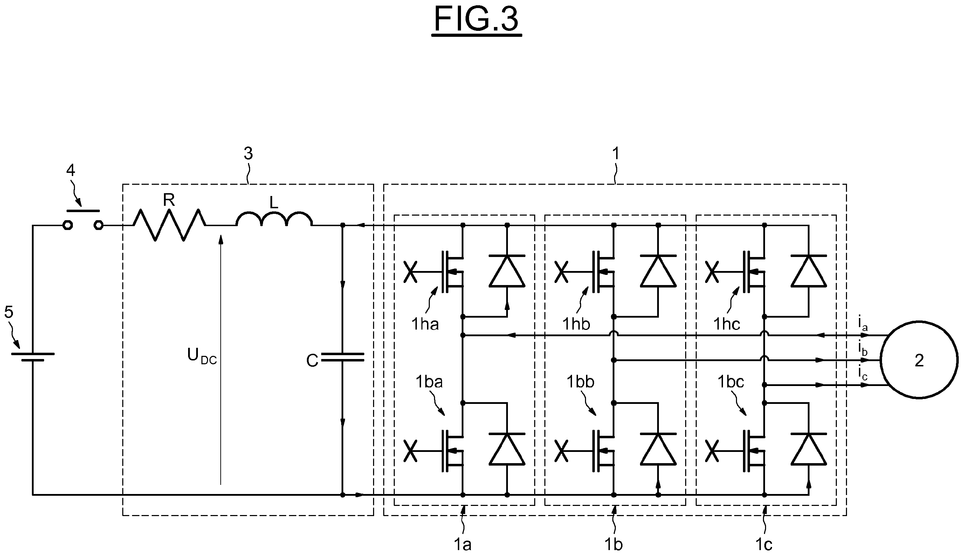

Si les relais de puissance 4 de la batterie sont ouverts, il en résulte une augmentation de la tension du bus DC pour s'égaliser à la tension de force électromotrice. Selon le dimensionnement de la machine, cette tension peut-être beaucoup plus élevée que la tension de fonctionnement nominal (de deux à quatre fois supérieure) ce qui génère des contraintes électriques sensibles sur la tenue en surtension de l'ensemble des composants connectés à ce bus DC (isolation, services plugs, convertisseur(s) DC/DC, compresseur de climatisation, résistances de chauffage, etc...). Les courants circulant dans le système dans un tel cas sont illustrés par la figure 3.

Cette impossibilité de contrôler la magnétisation de la machine conduit donc à l'impossibilité d'utiliser la configuration « circuit ouvert » comme mode refuge de l'onduleur, à moins de contraindre fortement le dimensionnement du système d'une des manières suivantes.

On peut dimensionner la machine pour que, à sa vitesse maximale, sa force électromotrice reste inférieure à la tension batterie minimale. Dans ce cas, le mode « circuit ouvert » ne peut conduire à une puissance régénératrice intempestive, ni à une surtension du bus DC, mais la puissance mécanique maximale de la machine s'en trouve fortement réduite.

On peut dimensionner les relais de puissance 4 de la batterie pour garantir de manière sûre la possibilité de déconnecter la batterie du bus DC en cas de défaut, avec un niveau de qualification de sureté suffisant, et dimensionner l'ensemble des composants connectés au bus DC à la tension de force électromotrice maximale. Ces deux contraintes ayant des conséquences importantes sur le système en termes de coûts.

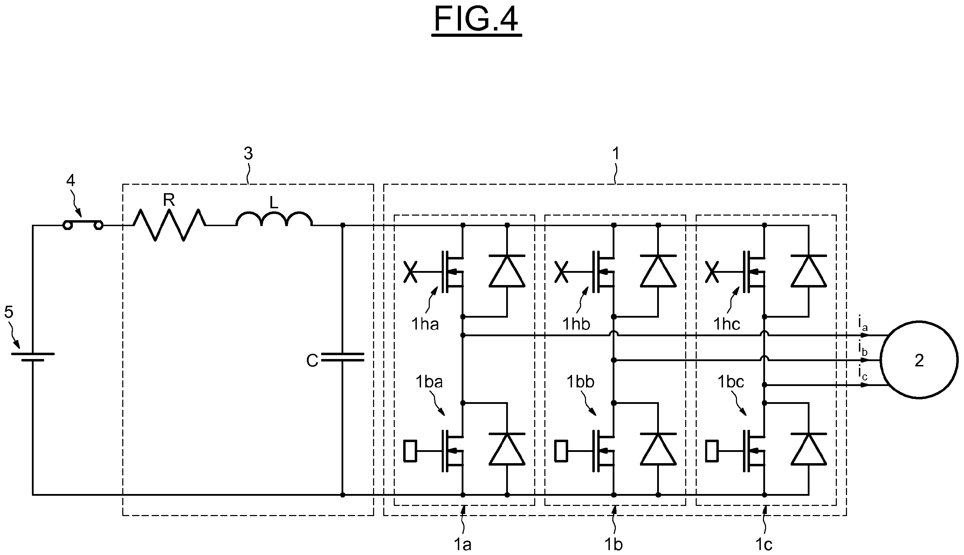

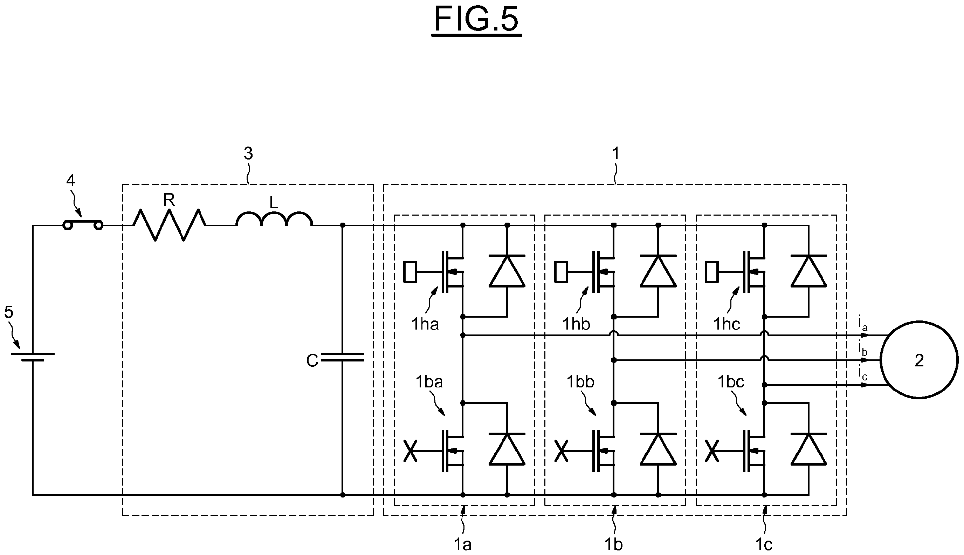

Un autre mode refuge usuel et pouvant être appliqué de manière sûre consiste en la mise en court-circuit des phases de la machine. Cela est réalisé par le pilotage de l'onduleur en configuration « court-circuit piloté » (« active short-circuit », en langue anglaise et acronyme correspondant « ASC »). Un tel pilotage consiste en la mise à équipotentiel des phases par la fermeture de tous les interrupteurs haut 1ha, 1hb et 1hc, illustrés par la figure 5, ou bien de tous les interrupteurs bas 1ba, 1bb, 1bc, illustré par la figure 4.

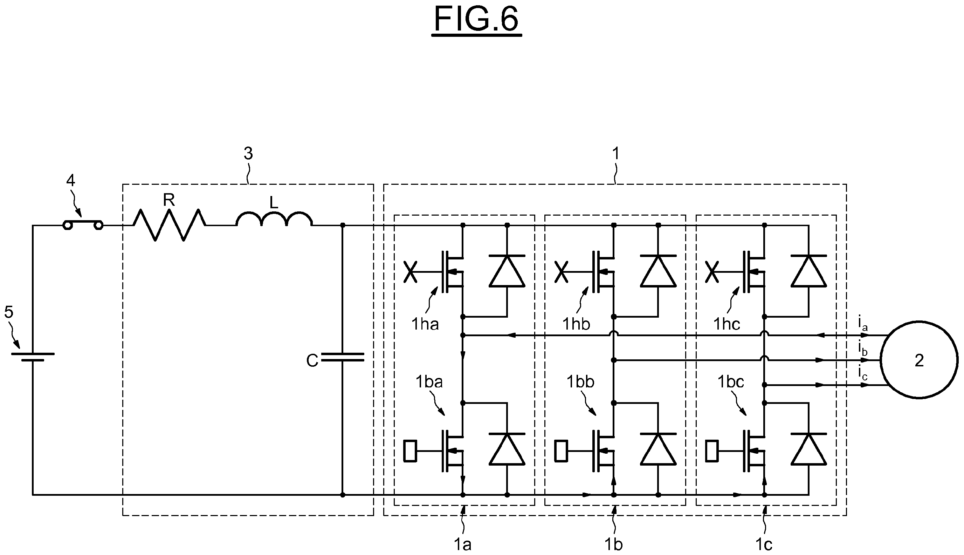

Ce mode refuge garantit une rapide et complète isolation de la machine du point de vue de la puissance, et garantit donc la mise à zéro instantanée de la puissance électrique, car aucun courant ne peut remonter en amont de l'onduleur. Cela permet donc de couvrir les exigences de sûreté quelle que soit la vitesse et le niveau de flux. La figure 6 illustre la circulation des courants dans le système dans le cas où tous les interrupteurs bas 1ba, 1bb et 1bc sont fermés, la machine étant active.

Cependant, ce mode refuge a également un inconvénient. A la mise en court-circuit, la machine subit une très forte discontinuité de tension sur les phases, ce qui provoque un transitoire des courants qui peut être violent pour certains points de fonctionnement. Ce transitoire de courant peut provoquer un endommagement irréversible du système. Par exemple, cela peut être une casse de l'onduleur par dépassement du courant de phase maximum admissible ou une démagnétisation irréversible partielle des aimants de la machine par dépassement du flux critique induit par les phases, seuil potentiellement abaissé du fait de la température élevée du rotor.

Ces endommagements peuvent ne pas conduire à un événement potentiellement sécuritaire, mais le taux d'occurrences de ces défaillances peut être inacceptable en termes de fiabilité du système.

Dans les domaines d'application automobiles connus, en véhicules électriques ou hybrides, les modes de défaillance sont l'un ou l'autre des deux modes présentés plus haut (mode « circuits ouverts» ou mode « court-circuit ») avec les conséquences sur le dimensionnement du système décrits ci-dessus.

Plusieurs documents présentent des systèmes de machines électriques ou d'onduleurs robustes à divers types de défaillances. Cette robustesse consiste à maintenir une fonctionnalité minimale malgré la défaillance, au moyen de diverses redondances fonctionnelles.

Le document FR2961361 divulgue une machine synchrone avec accès au neutre et onduleur avec un bras de pont supplémentaire pour piloter la tension de neutre et assurer la disponibilité de fonctionnement en cas de perte de contrôle d'une phase.

Les documents CA2773830 et US2012275069 divulguent une machine avec redondances de bobinages et détection de composante de courant DC dans les phases pour inhiber les phases présentant un dysfonctionnement.

Les documents IN2010CN01304 et WO2009/057188A1 divulguent un onduleur et un contrôle pour machine synchrone à aimants, avec dispositifs de détection de défauts et modes dégradés.

Le document JP2007189763 divulgue un procédé de protection d'un PMSM (d'après l'anglais «Permanent Magnet Synchronous Motor») à la démagnétisation en cas de court-circuit.

Le document EP2234262 divulgue un procédé de commande d'une machine électrique synchrone à aimant permanents, dans lequel lorsqu'on détecte un défaut de l'onduleur, notamment un transistor collé haut ou bas, on détecte également la présence d'une composante continue de courant au niveau des phases de l'onduleur, et on le place dans un mode refuge « court-circuit » ce qui permet de commander ensuite un contacteur coupant la connexion entre l'onduleur et la machine électrique.

Le document US20130043816 divulgue un procédé de commande d'un onduleur de traction pour machine électrique synchrone à aimants permanents, dans lequel, si un défaut du résolveur est détecté, l'onduleur est mis en mode refuge court-circuit, puis on estime la vitesse de rotation de la machine électrique. Si celle-ci est en dessous d'un seuil, alors l'onduleur est mis en circuit ouvert, alors que si la vitesse de rotation est supérieure à un seuil, alors l'onduleur reste en mode refuge court-circuit.

Le document US20120068645 divulgue un procédé de commande d'un onduleur, dans lequel lorsqu'un transistor de l'onduleur est court-circuité, l'onduleur est mis en circuit ouvert, puis on ferme certains transistors de manière à identifier le transistor court-circuité.

Le document US20090251831 divulgue un procédé de commande d'un onduleur de traction, dans lequel lorsqu'un transistor de l'onduleur est court-circuité, on utilise les autres transistors pour créer un courant alternatif qui permet à la machine électrique de traction de continuer à faire avancer la voiture, dans un mode dégradé.

Le document EP2299587 divulgue un procédé de commande d'un onduleur, dans lequel lorsqu'un transistor de l'onduleur est court-circuité, on identifie quel est l'ensemble d'interrupteurs hauts ou d'interrupteurs bas concerné par ce court-circuit.

Le document US20030117753 divulgue un système de protection d'un onduleur, comportant des circuits additionnels convertissant les courants des phases de l'onduleur en tensions qui permettent de détecter une anomalie de fonctionnement de l'onduleur.

Toutefois, aucun document ne présente de mode refuge, ou de modes de défaillance garantissant la sureté du système et son intégrité.

Il demeure donc un besoin pour un procédé de commande apte à mettre le système dans un mode refuge qui coupe le couple et la puissance électrique de la machine électrique de manière sûre, évite tout endommagement irréversible à tout point de fonctionnement, et ait des conséquences minimes sur le dimensionnement du système, son coût et sa performance.

L'invention a pour objet un procédé de commande d'une machine électrique synchrone à aimants permanents pour véhicule automobile alimenté par un onduleur, l'onduleur étant connecté en entrée à un bus à courant continu (dit bus « DC ») d'alimentation électrique,
l'onduleur comprend au moins trois bras connectés en parallèle, chaque bras comprenant un interrupteur haut connecté en série avec un interrupteur bas, chaque interrupteur étant muni d'une diode de roue libre. Le procédé comporte les étapes suivantes :
on détecte un défaut demandant la mise en état sûr de l'onduleur,
on commande l'onduleur afin de le placer dans un mode refuge « circuit ouvert »,
on détermine ensuite si la tension du bus DC est supérieure à sa valeur nominale,
si tel est le cas, on commande l'onduleur afin de le placer dans un mode refuge « court-circuit »,
si au contraire la tension du bus DC est inférieure à sa valeur nominale, on détecte si des courants de phases non nuls persistent dans la machine,
auquel cas, on commande l'onduleur afin de le placer dans un mode refuge « court-circuit »,
la commande de l'onduleur afin de le placer dans un mode refuge « circuit ouvert »s'effectuant en commandant l'ouverture de tous les interrupteurs de l'onduleur,
la commande de l'onduleur afin de le placer dans un mode refuge « court-circuit » s'effectuant en commandant la fermeture de tous les interrupteurs hauts et l'ouverture de tous les interrupteurs bas, ou inversement.

Pour détecter la persistance de ces courants de phases non nuls dans la machine, on peut attendre une durée de temps prédéterminée à partir de l'application du mode refuge « circuit ouvert »,
on peut mesurer le courant et on le compare à un seuil de détection de courants de phases non nuls,
si le courant mesuré est supérieur au seuil, le courant peut alors être considéré comme non nul.

En cas d'endommagement partiel de l'onduleur, la commande de l'onduleur afin de le placer dans un mode refuge « court-circuit » peut comporter les étapes suivantes :
on commande l'onduleur afin de le placer dans le mode refuge « court-circuit »,
on détermine s'il existe un court-circuit de la source d'alimentation électrique lors de l'application du mode réfuge « court-circuit » par la fermeture des lors de la fermeture des interrupteurs haut et l'ouverture des interrupteurs bas ou inversement,
si un court-circuit existe, on détermine qu'au moins un interrupteur haut est bloqué fermé si les interrupteurs haut ont été fermés ou qu'au moins un des interrupteurs haut est bloqué fermé si les interrupteurs bas ont été fermés,
auquel cas, si on a déterminé qu'un interrupteur bas est bloqué fermé, on commande la fermeture de tous les interrupteurs bas et l'ouverture de tous les interrupteurs hauts afin de placer l'onduleur dans un dans un mode refuge « court-circuit », et
si on a déterminé qu'un interrupteur haut est bloqué fermé, on commande la fermeture de tous les interrupteurs haut et l'ouverture de tous les interrupteurs bas afin de placer l'onduleur dans un mode refuge « court-circuit ».

Les étapes de procédé peuvent être câblées matériellement dans un dispositif logique, de type FPGA.

D'autres buts, caractéristiques et avantages de l'invention apparaîtront à la lecture de la description suivante, donnée uniquement à titre d'exemple non limitatif et faite en référence aux dessins annexés sur lesquels :
- la figure 1 illustre la commande en mode « circuit ouvert » de l'onduleur alimentant une machine électrique de véhicule automobile,
- la figure 2 illustre les courants circulant dans le système d'alimentation électrique d'une machine électrique à aimants permanents lorsque l'onduleur est commandé en mode « circuit ouvert »,
- la figure 3 illustre les courants circulant dans le système d'alimentation électrique d'une machine électrique à aimants permanents lorsque l'onduleur est commandé en mode « circuit ouvert » et lorsque les relais batterie sont ouverts,
- la figure 4 illustre une commande en mode « court-circuit piloté » de l'onduleur alimentant une machine électrique de véhicule automobile,
- la figure 5 illustre une autre commande en mode « court-circuit piloté » de l'onduleur alimentant une machine électrique de véhicule automobile,
- la figure 6 illustre les courants circulant dans le système d'alimentation électrique d'une machine électrique à aimants permanents lorsque l'onduleur est commandé en mode « court-circuit piloté », et
- la figure 7 illustre les principales étapes du procédé de commande d'une machine électrique selon l'invention.

Le procédé de commande d'une machine électrique synchrone à aimants permanents pour véhicule automobile comprend une mise en état sûr de l'onduleur de contrôle de la machine électrique, par utilisation combinée des configurations en « circuit ouvert » et en « court-circuit » de l'onduleur.

La commande d'activation de cet état sûr peut-être réalisée de manière basique par le système, sans recours au microcontrôleur de commande de l'onduleur, en ayant recours à une solution matérielle du type logique câblée (FPGA). Cet état peut donc consister en un mode refuge de sureté pour le système.

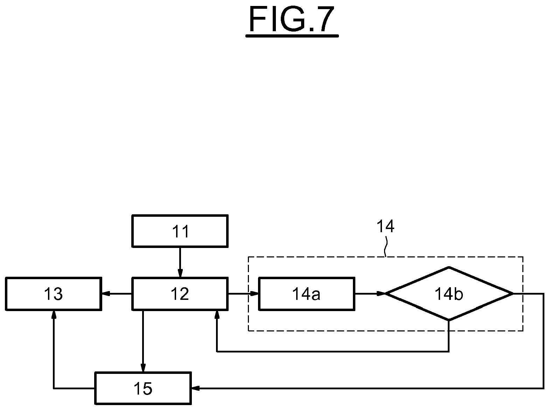

Le procédé comprend les étapes suivantes illustrées par la figure 7.

A l'étape 11, on détecte un défaut demandant la mise en état sûr du système. Lorsque tel est le cas, on active le mode refuge « circuit ouvert » à l'étape 12. Ce mode, dans un premier temps, conduit à faire chuter les courants de phase.

A l'étape 12, on détermine si la tension du bus DC est supérieure à sa valeur nominale. Si tel est le cas, on active le mode refuge « court-circuit » au cours d'une étape 15. Si tel n'est pas le cas, et si la force électromotrice (entre phases) est inférieure à la tension DC de l'onduleur, ces courants de phase chutent à zéro, le couple électromagnétique moteur s'estompe à zéro, la puissance électrique est coupée de manière rapide, et le système est dans un état sûr et le procédé se termine par une étape 13.

Si la force électromotrice (entre phases) est supérieure à la tension DC de l'onduleur, les courants de phase restent non nuls après quelques millisecondes.

Au cours d'une étape 14, on détecte la persistance de ces courants de phases non nuls dans la machine. Pour cela, au cours d'une étape 14a, on attend une durée de temps entre l'activation du mode refuge « circuit ouvert » et la mesure du courant. Au cours d'une étape 14b, on mesure le courant et on le compare à un seuil de détection de courants de phases non nuls. Si le courant mesuré est inférieur ou égal au seuil, le courant est alors considéré comme nul. Le procédé se poursuit à l'étape 12 en considérant le courant nul.

Si le courant mesuré est supérieur au seuil, on active le mode refuge « court-circuit » au cours de l'étape 15.

Etant donné que le mode « circuit ouvert » était précédemment actif, la machine est déjà en mode de défluxage et la mise en court-circuit provoque un transitoire de courants beaucoup plus faible que lorsque cette mise en court-circuit intervient dans un état de forte saturation magnétique. Le système peut aisément être dimensionné pour que ce transitoire de courant ne puisse pas l'endommager, quel que soit la vitesse d'occurrence du défaut. La mise en court-circuit de la machine assure la coupure rapide de la puissance électrique, et le système est dans un état sûr. Le procédé se termine à l'étape 13

Le seuil de détection de courants de phases non nuls indiqué peut être par exemple de 10A, mais est en tout état de cause dimensionné en fonction des courants de la machine électrique. La détection d'un courant non nul dans les phases, peut être réalisée en fonction des mesures des capteurs de courants de phase dont ce type d'onduleur est pourvu (état de l'art pour la traction électrique).

Le délai d'activation du mode « court-circuit » en cas de courant résiduel dans les phases après activation du mode « circuit ouvert » constitue un réglage du dispositif, propre à chaque application.

Ce délai doit être suffisamment long pour laisser le temps aux courants de phase de chuter et à la machine d'entrer en mode défluxage, pour garantir que le transitoire de courant, en cas de mise en court-circuit, ne puisse pas endommager le système.

Ce délai doit cependant être suffisamment court pour couper la puissance électrique avant dépassement de la limite de tension maximale du bus, en cas de force électromotrice élevée.

En pratique, ce délai sera de quelques millisecondes, par exemple 10 ms.

Alternativement, le mode sûr peut-être amélioré pour garantir la mise en mode « court-circuit » en cas de casse partielle de l'onduleur, par le changement de demi-bras réalisant l'équipotentiel des phases, dans le cas où l'onduleur détecte la mise en court-circuit de la source par un bras au moment de l'activation du mode « court-circuit ». En effet, si on détecte que la source d'alimentation est en court-circuit alors que le demi-bras haut ou bas est fermé, cela implique qu'au moins un des interrupteurs de l'autre demi-bras est bloqué fermé. Dans ce cas, il suffit de commander l'ouverture du demi-bras fermé et de commander la fermeture de l'autre demi-bras. Ainsi, le ou les interrupteurs bloqués fermés sont inclus dans le demi-bras fermé. Ils ne causent plus de court-circuit de la source d'alimentation électrique.

Une autre solution consiste à sélectionner le mode refuge, « circuit ouvert » ou « court-circuit » en fonction de la vitesse de rotation du moteur. La mise en œuvre est beaucoup plus complexe si l'on souhaite éviter le recours au microcontrôleur de l'onduleur et réaliser un mode refuge sûr du système basique et purement hardware. Cela exigerait en effet l'utilisation de logique câblée (FPGA) avec intégration à ce niveau de la mesure de position, et calcul par logique câblée parallèle de la vitesse.

En dehors de la traction électrique, cette solution peut convenir à tout système d'actionneur avec machine synchrone à aimants permanents, nécessitant une mise en état sûr de coupure de puissance rapide par un mode refuge basique réalisable par hardware.

## Revendications

1. Procédé de commande d'une machine électrique synchrone à aimant permanents (2) pour véhicule automobile alimenté par un onduleur (1), l'onduleur (1) étant connecté en entrée à un bus à courant continu d'alimentation électrique,
l'onduleur (1) comprenant au moins trois bras (1a, 1b, 1c) connectés en parallèle, chaque bras comprenant un interrupteur haut (1ha, 1hb, 1hc) connecté en série avec un interrupteur bas (1ba, 1bb, 1bc), chaque interrupteur étant muni d'une diode de roue libre,
**caractérisé par le fait qu'**il comprend les étapes suivantes :
on détecte un défaut demandant la mise en état sûr de l'onduleur,
on commande l'onduleur afin de le placer dans un mode refuge « circuit ouvert »,
on détermine ensuite si la tension du bus DC est supérieure à sa valeur nominale,
si tel est le cas, on commande l'onduleur afin de le placer dans un mode refuge « court-circuit »,
si au contraire la tension du bus DC est inférieure à sa valeur nominale, on détecte si des courants de phases non nuls persistent dans la machine, auquel cas on commande l'onduleur afin de le placer dans un mode refuge « court-circuit »,
la commande de l'onduleur afin de le placer dans un mode refuge « circuit ouvert » s'effectuant en commandant l'ouverture de tous les interrupteurs de l'onduleur,
et la commande de l'onduleur afin de le placer dans un mode refuge « court-circuit » s'effectuant en commandant la fermeture de tous les interrupteurs hauts et l'ouverture de tous les interrupteurs bas, ou inversement.

2. Procédé selon la revendication précédente, dans lequel, pour détecter la persistance de ces courants de phases non nuls dans la machine, on attend une durée de temps prédéterminée à partir de l'application du mode refuge « circuit ouvert »,
on mesure le courant et on le compare à un seuil de détection de courants de phases non nuls,
si le courant mesuré est supérieur au seuil, le courant est alors considéré comme non nul.

3. Procédé selon l'une quelconque des revendications précédentes, dans lequel en cas d'endommagement partiel de l'onduleur, la commande de l'onduleur afin de le placer dans un mode refuge « court-circuit » comporte les étapes suivantes :
on commande l'onduleur afin de le placer dans le mode refuge « court-circuit »,
on détermine s'il existe un court-circuit de la source d'alimentation électrique lors de l'application du mode refuge « court-circuit » par la fermeture des interrupteurs haut et l'ouverture des interrupteurs bas ou inversement,
si un court-circuit existe, on détermine qu'au moins un des interrupteurs bas est bloqué fermé si les interrupteurs haut ont été fermés ou qu'au moins un des interrupteurs haut est bloqué fermé si les interrupteurs bas ont été fermés, auquel cas, si on a déterminé qu'un interrupteur bas est bloqué fermé, on commande la fermeture de tous les interrupteurs bas et l'ouverture de tous les interrupteurs hauts afin de placer l'onduleur dans un mode refuge « court-circuit », et
si on a déterminé qu'un interrupteur haut est bloqué fermé, on commande la fermeture de tous les interrupteurs haut et l'ouverture de tous les interrupteurs bas afin de placer l'onduleur dans un mode refuge « court-circuit ».

4. Procédé selon l'une quelconque des revendications précédentes, dans lequel les étapes de procédé sont câblées matériellement dans un dispositif logique de type FPGA.

## Patentansprüche

1. Steuerverfahren einer elektrischen Synchronmaschine mit Permanentmagneten (2) für ein Kraftfahrzeug, die von einem Wechselrichter (1) versorgt wird, wobei der Wechselrichter (1) am Eingang mit einem Stromversorgungs-Gleichstrombus verbunden ist,
wobei der Wechselrichter (1) mindestens drei parallel verbundene Arme (1a, 1b, 1c) enthält, wobei jeder Arm einen oberen Schalter (1ha, 1hb, 1hc) enthält, der in Reihe mit einem unteren Schalter (1ba, 1bb, 1bc) verbunden ist, wobei jeder Schalter mit einer Freilaufdiode versehen ist,
**dadurch gekennzeichnet, dass** es die folgenden Schritte enthält:
es wird ein Fehler erfasst, der das Versetzen des Wechselrichters in einen sicheren Zustand verlangt,
der Wechselrichter wird gesteuert, um ihn in einen Failsafe-Modus "offene Schaltung" zu bringen,
anschließend wird bestimmt, ob die Spannung des DC-Busses höher als ihr Nennwert ist,
wenn dies der Fall ist, wird der Wechselrichter gesteuert, um ihn in einen Failsafe-Modus "Kurzschluss" zu bringen, wenn dagegen die Spannung des DC-Busses niedriger als ihr Nennwert ist, wird erfasst, ob Phasenströme ungleich Null in der Maschine fortdauern, in welchem Fall der Wechselrichter gesteuert wird, um ihn in einen Failsafe-Modus "Kurzschluss" zu bringen,
wobei die Steuerung des Wechselrichters, um ihn in einen Failsafe-Modus "offene Schaltung" zu bringen, ausgeführt wird, indem die Öffnung aller Schalter des Wechselrichters gesteuert wird,
und die Steuerung des Wechselrichters, um ihn in einen Failsafe-Modus "Kurzschluss" zu bringen, ausgeführt wird, indem das Schließen aller oberen Schalter und das Öffnen aller unteren Schalter oder umgekehrt gesteuert wird.

2. Verfahren nach dem vorhergehenden Anspruch, wobei, um die Fortdauer dieser Phasenströme ungleich Null in der Maschine zu erfassen, eine vorbestimmte Zeitdauer ab der Anwendung des Failsafe-Modus "offene Schaltung" gewartet wird,
der Strom gemessen und mit einer Erfassungsschwelle von Phasenströmen ungleich Null verglichen wird,
wenn der gemessene Strom höher als die Schwelle ist, der Strom dann als ungleich Null angesehen wird.

3. Verfahren nach einem der vorhergehenden Ansprüche, wobei im Fall einer teilweisen Beschädigung des Wechselrichters die Steuerung des Wechselrichters, um ihn in einen Failsafe-Modus "Kurzschluss" zu bringen, die folgenden Schritte aufweist:
der Wechselrichter wird gesteuert, um ihn in den Failsafe-Modus "Kurzschluss" zu bringen,
es wird bestimmt, ob es einen Kurzschluss der elektrischen Versorgungsquelle bei der Anwendung des Failsafe-Modus "Kurzschluss" durch das Schließen der oberen Schalter und das Öffnen der unteren Schalter oder umgekehrt gibt,
wenn es einen Kurzschluss gibt, wird bestimmt, dass mindestens einer der unteren Schalter geschlossen blockiert ist, wenn die oberen Schalter geschlossen wurden, oder dass mindestens einer der oberen Schalter geschlossen blockiert ist, wenn die unteren Schalter geschlossen wurden, in welchem Fall, wenn bestimmt wird, dass ein unterer Schalter geschlossen blockiert ist, das Schließen aller unteren Schalter und das Öffnen aller oberen Schalter gesteuert wird, um den Wechselrichter in einen Failsafe-Modus "Kurzschluss" zu bringen, und
wenn bestimmt wurde, dass ein oberer Schalter geschlossen blockiert ist, wird das Schließen aller oberen Schalter und das Öffnen aller unteren Schalter gesteuert, um den Wechselrichter in einen Failsafe-Modus "Kurzschluss" zu bringen.

4. Verfahren nach einem der vorhergehenden Ansprüche, wobei die Verfahrensschritte materiell in einer logischen Vorrichtung des Typs FPGA verkabelt sind.

## Claims

1. Method for controlling a permanent-magnet synchronous electric machine (2) for a motor vehicle supplied with power by an inverter (1), the inverter (1) being connected at input to an electric power supply DC-current bus,
the inverter (1) comprising at least three arms (1a, 1b, 1c) connected in parallel, each arm comprising a high-side switch (1ha, 1hb, 1hc) connected in series with a low-side switch (1ba, 1bb, 1bc), each switch being equipped with a freewheeling diode,
**characterized in that** it comprises the following steps:
detecting a fault requiring the inverter to be put into a safe state,
controlling the inverter so as to put it into an "open-circuit" safe mode,
then determining whether the voltage of the DC bus is greater than its nominal value,
if this is the case, controlling the inverter so as to put it into a "short-circuit" safe mode,
if on the other hand the voltage of the DC bus is less than its nominal value, detecting whether non-zero phase currents are still present in the machine, in which case the inverter is controlled so as to put it into a "short-circuit" safe mode,
the inverter being controlled so as to put it into an "open-circuit" safe mode by commanding the opening of all of the switches of the inverter,
and the inverter being controlled so as to put it into a "short-circuit" safe mode by commanding the closure of all of the high-side switches and the opening of all of the low-side switches, or vice versa.

2. Method according to the preceding claim, wherein, in order to detect that these non-zero phase currents are still present in the machine, a predetermined period of time is awaited starting from the application of the "open-circuit" safe mode,
the current is measured and compared with a non-zero phase current detection threshold,
if the measured current is greater than the threshold, the current is then considered to be non-zero.

3. Method according to either one of the preceding claims, wherein, in the event of partial damage to the inverter, controlling the inverter so as to put it into a "short-circuit" safe mode comprises the following steps:
controlling the inverter so as to put it into the "short-circuit" safe mode,
determining whether there is a short circuit of the electric power source when the "short-circuit" safe mode is applied by closing the high-side switches and opening the low-side switches, or vice versa,
if there is a short circuit, determining that at least one of the low-side switches is blocked in the closed state if the high-side switches have been closed or that at least one of the high-side switches is blocked in the closed state if the low-side switches have been closed, in which case, if it has been determined that a low-side switch is blocked in the closed state, commanding the closure of all of the low-side switches and the opening of all of the high-side switches so as to put the inverter into a "short-circuit" safe mode, and
if it has been determined that a high-side switch is blocked in the closed state, commanding the closure of all of the high-side switches and the opening of all of the low-side switches so as to put the inverter into a "short-circuit" safe mode.

4. Method according to any one of the preceding claims, wherein the method steps are hard-wired in an FPGA logic device.
